# EUROPEAN PATENT SPECIFICATION

(11) **EP 1 616 110 B1**
(45) Date of publication and mention of the grant of the patent: **04.04.2007**
(21) Application number: 03816451.3
(22) Date of filing: 28.03.2003
(51) Int. Cl.: F16D 65/12

(54) **BRAKING BAND FOR BUILT-UP BRAKE DISCS**
BREMSBAND FÜR ZUSAMMENGESETZTE BREMSSCHEIBEN
BANDE DE FREINAGE POUR DISQUES DE FREINS COMPOSITES

(43) Date of publication of application: 18.01.2006
(73) Proprietor: Freni Brembo S.p.A., 24035 Curno (Bergamo) (IT)
(72) Inventor: TIRONI, Giovanni, Mario, I-24044 Dalmine, BERGAMO (IT); BIONDO, Simone, I-20051 Limbiate, MILANO (IT)
(74) Representative: Siniscalco, Fabio
(86) International application number: PCT/IT2003/000186
(87) International publication number: WO 2004/085870

(56) References cited:
- DE-U- 9 421 426
- FR-A- 2 810 382
- US-A- 5 823 303

## Description

The present invention relates to a braking band for built-up brake discs.

A brake disc customarily comprises a support bell to be connected for example to the wheel hub of a vehicle, and a braking band which co-operates with the calipers to exert the braking action on the vehicle. In the built-up brake discs of the prior art, the braking band is obtained separately from the bell and connected thereto by means of connecting members which permit, within certain limits, relative movements between the braking band and the bell, in order to avoid unwanted deformations of the entire brake disc due to thermal expansion, and also the tensions due to the non-uniform structure and to the deformations prevented.

The connecting members, customarily pins or radial protuberances, are fixed to the braking band or obtained therefrom, in particular from the connecting members for connection between the plates or from the plates themselves.

However, the involvement of the plates and the connecting members between the plates in the connection between the braking band and the bell has proved to be a drawback owing to the fact that the connecting members constitute an obstacle to the ventilation of the brake disc and involve a non-uniform distribution of the mass and of the strains in the parts of the brake disc most subject to the mechanical and thermal stresses through braking. DE 94214264 discloses a breaking band having features cited in the preamble of annexed claim 1.

The aim of the present invention is that of providing a braking band for a built-up brake disc having characteristics such as to remedy the drawbacks mentioned with reference to the prior art.

This and other aims are fulfilled by means of a braking band for a built-up brake disc according to claim 1.
For greater understanding of the invention and appreciation of its advantages, a description is given below of some of its non-limiting exemplary embodiments, with reference to the appended drawings, in which:

Figure 1 is a sectional view of a braking band according to the invention;

Figure 2 is a sectional view of a brake disc according to the invention;

Figure 3 is an enlarged view of a detail of Figure 2;

Figure 4 is a perspective view of the brake disc of Figure 2;

Figure 5 is a partial perspective view of a further embodiment of the invention.

With reference to the drawings, a braking band for a built-up brake disc is indicated as a whole by the reference 1. The braking band 1 comprises one or more plates 2, 3, provided with at least one friction surface, 4, 5, and a connecting portion 6, disposed at an inner circumference 7 of the braking band 1 and rigidly connected with one of the plates. The connecting portion 6 defines a plurality of main seats 8 which are intended to receive connecting members, preferably cylindrical pins 9, for the radially slidable connection of the band 1 to a bell 10.

The main seats 8, or sliding axes s defined thereby, lie in a plane substantially parallel to a median plane 11 of the plate 2 and spaced therefrom in the direction of the friction surface 4 of the plate 2.

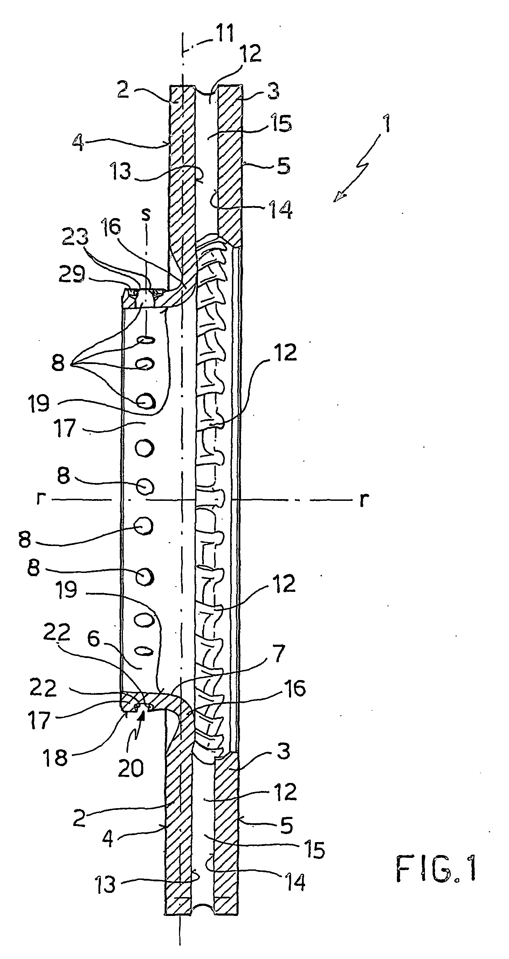

According to one embodiment, illustrated for example in Figure 1, the braking band 1 comprises two plates 2, 3 provided with respective friction surfaces 4 and 5 opposed to one another and facing towards the outside of the band 1. The plates 2, 3 are connected to one another by means of suitable connecting members, for example fins 12 or,pegs, and their inner surfaces 13, 14, opposed to the friction surfaces 4, 5, define one or more ventilation ducts 15.

The connecting portion 6 is joined, preferably integrally, to a first plate 2 of the two plates 2, 3 and comprises a section 17 of annular shape, substantially cylindrical or conical, which projects towards the outside of the band 1 in a direction opposed to the ventilation duct 15. In particular, said connecting portion 6 extends substantially transversely, preferably perpendicular to the median plane 11 of the first plate 2.

According to one embodiment, a connecting or transition portion 16 between the first plate 2 and the connecting portion 6 has a thickness less than the thickness of the first plate 2 and, advantageously, than the thickness of the connecting portion 6, in particular of the cylindrical section 17.

The aforesaid main seats 8 are preferably produced in holes which are radial with respect to an axis of rotation r of the braking band 1, such that the connecting pins 9, received in said holes 8, are also oriented radially to the axis r.

According to one embodiment, the connecting portion 6 defines a plurality of said radial (preferably through) holes 8, disposed at a pitch about the axis of rotation r and at about halfway along the cylindrical section 17.

The cylindrical section 17 has on a radially outer surface 18 thereof a circumferential groove 20, preferably continuous and disposed at the radial holes 8. The groove 20 has a width substantially equal to the diameter of the radial holes 8 and the lateral walls of the groove 20 are provided with an undercut 22 or a relief preferably of semi-circular cross-section.

The undercuts 22 constitute secondary seats for respectively receiving a spring ring 23, preferably formed of a spring steel wire which extends completely round the connecting portion 6. The spring rings 23 are capable of engaging a suitable groove 24 of the connecting pins 9 to lock the latter in the main seats 8.

In order to allow the two spring rings 23 to be elastically deformed so as to be able to engage the groove 24 of the connecting pins 9, the groove 20 is widened at the radial holes 8, preferably forming substantially cylindrical seats 29 coaxial with the main seats 8.

According to a further embodiment, the secondary seats are produced in axial holes 21 disposed at each main seat 8 and opening into the latter. The axial holes 21 are capable of receiving locking pins 25 which engage suitable grooves or holes of the connecting pins 9 to lock them. According to one embodiment, the locking pins 25 lock the connecting pins 9 with interference.

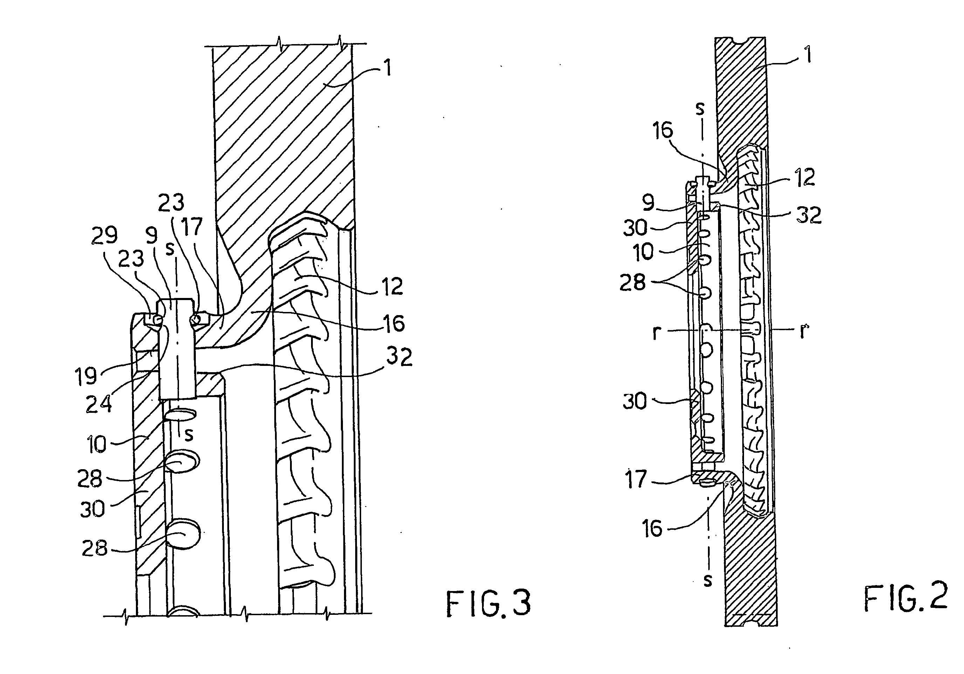

Figures 2 to 5 show built-up brake discs 26 comprising the braking band 1 and a substantially annular bell 10. The bell 10 comprises a fixing portion 30, preferably in the shape of an annular disc, provided with a plurality of axial holes 31 capable of receiving fixing screws for fixing the bell 10 to the wheel hub of the vehicle. Along an outer circumference of the fixing portion 30 there is formed a portion 32, preferably annular or cylindrical, having an outside diameter smaller than the inside diameter of the braking band 1, in particular of the connecting portion 6, such that a radially inner cylindrical surface 19 of the connecting portion 6 receives the bell 10 with radial clearance.

Said annular or cylindrical portion 32 of the bell 10 defines a plurality of radial seats 28, preferably cylindrical and disposed at the main seats 8 of the connecting portion 6. The radial seats 28 are capable of slidingly receiving the connecting pins 9 for producing the connection between the bell 10 and the braking band 1.

A description will be given below of the assembly and the operation of a built-up brake disc according to the invention.

During the assembly of the brake disc 26, the two spring rings 23 are disposed at the two undercuts 22 of the connecting portion 6 and the bell 10 is positioned inside the connecting portion 6 such that the radial seats 28 of the bell 10 are aligned with the main seats 8 of the connecting portion 6. The connecting pins 9 are then inserted into the main seats 8 and into the radial seats 28 of the bell 10 which are aligned therewith. During the insertion of the connecting pins 9, the spring rings 23 expand at the cylindrical seats 29 in order to snap resiliently into the grooves 24 when they face them (Figure 3), locking the pins 9 in position.

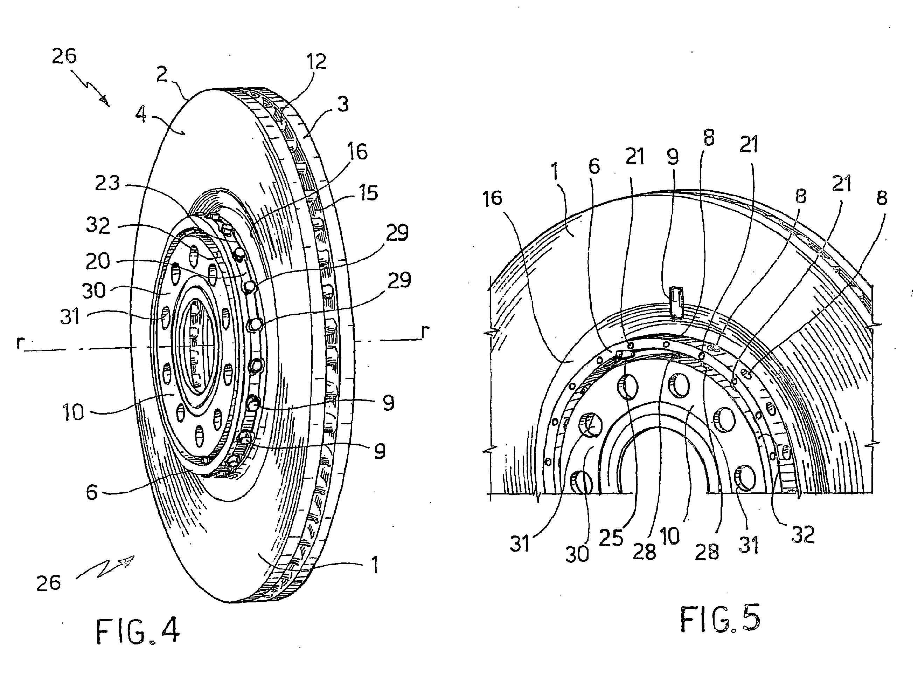

According to the embodiment illustrated in Figure 5, after the insertion of the connecting pins 9, these are locked in position by means of the locking pins 25 inserted with interference into the secondary seats or into the axial holes 21.

During a braking operation, the braking band 1 and the brake disc 26 according to the invention permit the uncoupling of the thermal expansions of the band 1 and of the bell 10, avoiding unwanted deformations and stresses of the braking disc 26. In other words, the band 1 can expand independently of the bell 10, owing to the possibility of the radial sliding of the connecting pins 9 in the radial seats 28 of the bell 10.

The braking band and the brake disc according to the invention have numerous advantages. The ventilation ducts 15 are completely free, permitting the maximum flow of cooling air through the braking band 1. Moreover, the connection between the braking band and the bell is simplified with respect to the prior art and is effected by means of a much reduced number of connecting members, involving a saving in assembly time and in production costs.

The connection between the braking band and the bell occurs in an area which functionally and structurally does not belong to the braking band in the conventional sense, advantageously permitting the separation both of the functions of friction, ventilation and connection and of the respective design of the plates, of the ventilation ducts and of the connecting members. This also includes the possibility of a targeted selection of the materials for the braking band, for example made of cast iron, and for the bell, for example of aluminium alloy, and also of the connecting pins.

An expert in the field, for the purpose of fulfilling contingent and specific requirements, may of course apply to the braking band and the brake disc according to the invention further modifications and variants, all however contained within the scope of protection of the invention, as defined by the following claims.

## Claims

1. A braking band (1) for a built-up brake disc (26), comprising:
- at least one plate (2) provided with at least one friction surface (4);
- a connecting portion (6), disposed at an inner circumference (7) of the braking band (1) and defining a plurality of main seats (8) capable of receiving connecting members (9) for the radially sliding connection of the braking band (1) to a bell (10),
wherein said connecting portion (6) is rigidly connected with the plate (2) and the main seats (8) are spaced from a median plane (11) of the plate (2) in the direction of the friction surface (4), **characterized in that** sliding axes (s), defined by said main seats (8), lie in a plane substantially parallel to the median plane (11) of the plate (2) and are spaced therefrom in the direction of the friction surface (4).

2. A braking band (1) according to claim 1, wherein the connecting portion (6) extends substantially transversely to said median plane (11).

3. A braking band (1) according to claim 1 or 2, wherein the connecting portion (6) has a substantially cylindrical annular shape which protrudes laterally from said plate (2).

4. A braking band (1) according to any one of the preceding claims, wherein the connecting portion (6) is integral with the plate (2).

5. A braking band (1) according to any one of the preceding claims, wherein the connecting portion (6) is connected to the plate (2) through a transition portion (16) having a thickness less than the thickness of the plate (2).

6. A braking band (1) according to claim 5, wherein the thickness of the transition portion (16) is less than the thickness of the connecting portion (6).

7. A braking band (1) according to any one of the preceding claims, comprising two plates (2; 3) provided with respective friction surfaces (4, 5) and connected to each other by means of suitable connecting members (12), defining one or more ventilation ducts (15) between the two plates (2, 3), wherein the connecting portion (6) is rigidly connected with a first plate (2) of the two plates (2, 3) and projects in a direction opposed to the ventilation duct (15).

8. A braking band (1) according to any one of the preceding claims, wherein the main seats (8) are capable of receiving connecting pins (9) such that the latter are oriented substantially radially to an axis of rotation (r) of the braking band (1).

9. A braking band (1) according to any one of the preceding claims, wherein said main seats (8) are formed by substantially radial through holes.

10. A braking band (1) according to any one of the preceding claims, wherein the connecting portion (6) defines one or more secondary seats (21, 22) for receiving locking members (23, 25) capable of locking the connecting members (9), in particular connecting pins, in said main seats (8).

11. A braking band (1) according to claim 10, wherein said secondary seats (21, 22) comprise holes (21) opening into said main seats (8) and capable of receiving locking pins (25).

12. A braking band (1) according to claim 10 or 11, wherein said secondary seats (21, 22) comprise reliefs (22) disposed at the main seats (8) and capable of receiving locking spring rings (23).

13. A braking band (1) according to claim 12, wherein the connecting portion (6, 17) defines a substantially circumferential and continuous groove (20), disposed at the main seats (8), in which lateral walls of the groove (20) are provided with undercuts (22) constituting said secondary seats (22) and being capable of receiving two spring rings (23) which extend at all the main seats (8).

14. A built-up brake disc (26), comprising a braking band (1) according to any one of the preceding claims and a bell (10) having an outside diameter smaller than the inside diameter of the braking band (1), wherein the bell (10) is provided with a plurality of radial seats (28), disposed at the main seats (8) of the connecting portion (6) and capable of slidingly receiving said connecting members (9).

15. A built-up brake disc according to claim 14, wherein said connecting members (9) are substantially cylindrical connecting pins.

16. A built-up brake disc (26) according to claim 14 or 15, when dependent on claim 11, wherein said connecting members (9) have opposing means (24), preferably grooves or holes, capable of engaging the locking members (23, 25).

17. A disc brake comprising a built-up brake disc according to one of claims 14 to 16.

## Patentansprüche

1. Bremsreif (1) für eine zusammengesetzte Bremsscheibe (26), umfassend:
- wenigstens eine Platte (2), welche mit wenigstens einer Reibfläche (4) versehen ist;
- einen Verbindungsabschnitt (6), welcher an einem Innenumfang (7) des Bremsreifs (1) angeordnet ist und eine Mehrzahl von Hauptsitzen (8) definiert, welche in der Lage sind, Verbindungselemente (9) für die Radialgleitverbindung des Bremsreifes (1) mit einer Glocke (10) aufzunehmen, wobei der Verbindungsabschnitt (6) starr mit der Platte (2) verbunden ist und die Hauptsitze (8) von einer Medianebene (11) der Platte (2) in der Richtung der Reibfläche (4) mit Abstand angeordnet sind,
**dadurch gekennzeichnet, dass** Gleitachsen (S), welche durch die Hauptsitze (8) definiert sind, in einer Ebene liegen, welche im Wesentlichen parallel zu der Medianebene (11) der Platte (2) ist, und von dieser aus in der Richtung der Reibfläche (4) mit Abstand angeordnet sind.

2. Bremsreif (1) nach Anspruch 1, wobei der Verbindungsabschnitt (6) im Wesentlichen quer zu der Medianebene (11) verläuft.

3. Bremsreif (1) nach Anspruch 1 oder 2, wobei der Verbindungsabschnitt (6) eine im Wesentlichen zylindrische ringförmige Gestalt aufweist, welche in Seitenrichtung von der Platte (2) absteht.

4. Bremsreif (1) nach einem der vorhergehenden Ansprüche, wobei der Verbindungsabschnitt (6) integral mit der Platte (2) ist.

5. Bremsreif (1) nach einem der vorhergehenden Ansprüche, wobei der Verbindungsabschnitt (6) mit der Platte (2) durch einen Übergangsabschnitt (16) verbunden ist, welcher eine Dicke aufweist, die geringer als die Dicke der Platte (2) ist.

6. Bremsreif (1) nach Anspruch 5, wobei die Dicke des Übergangsabschnitts (16) geringer ist als die Dicke des Verbindungsabschnitts (6).

7. Bremsreif (1) nach einem der vorhergehenden Ansprüche, umfassend zwei Platten (2, 3), welche mit jeweiligen Reibflächen (4, 5) versehen sind und miteinander mittels geeigneter Verbindungselemente (12) verbunden sind, wobei sie eine oder mehrere Entlüfgungsleitungen (15) zwischen den zwei Platten (2, 3) definieren, wobei der Verbindungsabschnitt (6) starr mit einer ersten Platte (2) der zwei Platten (2, 3) verbunden ist und in einer der Entlüfgungsleitung (15) entgegengesetzten Richtung vorragt.

8. Bremsreif (1) nach einem der vorhergehenden Ansprüche, wobei die Hauptsitze (8) in der Lage sind, Verbindungszapfen (9) derart aufzunehmen, dass die Letzteren im Wesentlichen radial zu einer Drehachse (r) des Bremsreifes (1) orientiert sind.

9. Bremsreif (1) nach einem der vorhergehenden Ansprüche, wobei die Hauptsitze (8) durch im Wesentlichen radiale Durchgangslöcher gebildet sind.

10. Bremsreif (1) nach einem der vorhergehenden Ansprüche, wobei der Verbindungsabschnitt (6) einen oder mehrere sekundäre Sitze (21, 22) definiert zum Aufnehmen von Verriegelungselementen (23, 25), welche in der Lage sind, die Verbindungselemente (9), insbesondere Verbindungszapfen, in den Hauptsitzen (8) zu verriegeln.

11. Bremsreif (1) nach Anspruch 10, wobei die sekundären Sitze (21, 22) Löcher (21) umfassen, welche in die Hauptsitze (8) hinein öffnen und in der Lage sind, Verriegelungszapfen (25) aufzunehmen.

12. Bremsreif (1) nach Anspruch 10 oder 11, wobei die sekundären Sitze (21, 22) Konturen (22) umfassen, welche an den Hauptsitzen (8) angeordnet sind und in der Lage sind, Verriegelungsfederringe (23) aufzunehmen.

13. Bremsreif (1) nach Anspruch 12, wobei der Verbindungsabschnitt (6, 17) eine im Wesentlichen in Umfangsrichtung verlaufende und kontinuierliche Nut (20) definiert, welche an den Hauptsitzen (8) angeordnet ist, in welcher Seitenwände der Nut (20) mit Hinterschnitten (22) versehen sind, welche die sekundären Sitze (22) bilden, und welche in der Lage sind, zwei Federringe (23) aufzunehmen, welche bei all den Hauptsitzen (8) verlaufen.

14. Zusammengesetzte Bremsscheibe (26), umfassend einen Bremsreif (1) nach einem der vorhergehenden Ansprüche und eine Glocke (10) mit einem Außendurchmesser, welcher kleiner ist als der Innendurchmesser des Bremsreifs (1), wobei die Glocke (10) mit einer Mehrzahl von radialen Sitzen (28) versehen ist, welche an den Hauptsitzen (8) des Verbindungsabschnitts (6) angeordnet sind und in der Lage sind, die Verbindungselemente (9) verschieblich aufzunehmen.

15. Zusammengesetzte Bremsscheibe nach Anspruch 14, wobei die Verbindungselemente (9) im Wesentlichen zylindrische Verbindungszapfen sind.

16. Zusammengesetzte Bremsscheibe (26) nach Anspruch 14 oder 15, wenn rückbezogen auf Anspruch 11, wobei die Verbindungselemente (9) gegenüberstehende Mittel (24) aufweisen, vorzugsweise Nuten oder Löcher, welche in der Lage sind, mit den Verriegelungselementen (23, 25) in Eingriff zu sein.

17. Scheibenbremse, umfassend eine zusammengesetzte Bremsscheibe nach einem der Ansprüche 14 bis 16.

## Revendications

1. Bande de freinage (1) pour un disque de frein composite (26), comprenant :
- au moins une plaque (2) comportant au moins une surface de frottement (4) ;
- une partie de raccordement (6) disposée au niveau d'une circonférence intérieure (7) de la bande de freinage (1) et définissant une pluralité de sièges principaux (8) capables de recevoir des éléments de raccordement (9) pour le raccordement radialement coulissant de la bande de freinage (1) à une cloche (10), dans laquelle ladite partie de raccordement (6) est raccordée de manière rigide à la plaque (2) et les sièges principaux (8) sont éloignés d'un plan médian (11) de la plaque (2) dans la direction de la surface de frottement (4), **caractérisée en ce que**
des axes coulissants (s), définis par lesdits sièges principaux (8), se trouvent dans un plan sensiblement parallèle au plan médian (11) de la plaque (2) et sont espacés de celui-ci dans la direction de la surface de frottement (4).

2. Bande de freinage (1) selon la revendication 1, dans laquelle la partie de raccordement (6) s'étend sensiblement de manière transversale audit plan médian (11).

3. Bande de freinage (1) selon la revendication 1 ou 2, dans laquelle la partie de raccordement (6) a une forme annulaire sensiblement cylindrique qui fait saillie latéralement à partir de ladite plaque (2).

4. Bande de freinage (1) selon l'une quelconque des revendications précédentes, dans laquelle la partie de raccordement (6) est formée d'une seule pièce avec la plaque (2).

5. Bande de freinage (1) selon l'une quelconque des revendications précédentes, dans laquelle la partie de raccordement (6) est raccordée à la plaque (2) par l'intermédiaire d'une partie de transition (16) ayant une épaisseur inférieure à l'épaisseur de la plaque (2).

6. Bande de freinage (1) selon la revendication 5, dans laquelle l'épaisseur de la partie de transition (16) est inférieure à l'épaisseur de la partie de raccordement (6).

7. Bande de freinage (1) selon l'une quelconque des revendications précédentes, comprenant deux plaques (2, 3) munies de surfaces de frottement respectives (4, 5) et raccordées l'une à l'autre par l'intermédiaire d'éléments de raccordement appropriés (12), définissant un ou plusieurs conduits d'aération (15) entre les deux plaques (2, 3), dans laquelle la partie de raccordement (6) est raccordée de manière rigide à une première plaque (2) parmi les deux plaques (2, 3) et fait saillie dans une direction opposée au conduit d'aération (15).

8. Bande de freinage (1) selon l'une quelconque des revendications précédentes, dans laquelle les sièges principaux (8) sont capables de recevoir des tiges de raccordement (9) de manière à ce que ces dernières soient orientées sensiblement radialement par rapport à un axe de rotation (r) de la bande de freinage (1).

9. Bande de freinage (1) selon l'une quelconque des revendications précédentes, dans laquelle lesdits sièges principaux (8) sont formés par des trous débouchants sensiblement radiaux.

10. Bande de freinage (1) selon l'une quelconque des revendications précédentes, dans laquelle la partie de raccordement (6) définit un ou plusieurs sièges secondaires (21, 22) pour recevoir des moyens de blocage (23, 25) capables de bloquer les éléments de raccordement (9), en particulier les tiges de raccordement, dans lesdits sièges principaux (8).

11. Bande de freinage (1) selon la revendication 10, dans laquelle lesdits sièges secondaires (21, 22) comprennent des trous (21) s'ouvrant dans lesdits sièges principaux (8) et capables de recevoir les tiges de blocage (25).

12. Bande de freinage (1) selon la revendication 10 ou 11, dans laquelle lesdits sièges secondaires (21, 22) comprennent des reliefs (22) disposés au niveau des sièges principaux (8) et capables de recevoir des anneaux de ressort de blocage (23).

13. Bande de freinage (1) selon la revendication 12, dans laquelle la partie de raccordement (6, 17) définit une rainure sensiblement circonférentielle et continue (20) disposée au niveau des sièges principaux (8), dans laquelle les parois latérales de la rainure (20) comportent des gorges (22) constituant lesdits sièges secondaires (22) et étant capables de recevoir deux anneaux de ressort (23) qui s'étendent au niveau de tous les sièges principaux (8).

14. Disque de frein composite (26) comprenant une bande de freinage (1) selon l'une quelconque des revendications précédentes et une cloche (10) ayant un diamètre extérieur plus petit que le diamètre intérieur de la bande de freinage (1), dans laquelle la cloche (10) est munie d'une pluralité de sièges radiaux (28), disposés au niveau des sièges principaux (8) de la partie de raccordement (6) et capables de recevoir de manière coulissante lesdits éléments de raccordement (9).

15. Disque de frein composite selon la revendication 14, dans lequel lesdits éléments de raccordement (9) sont des tiges de raccordement sensiblement cylindriques.

16. Disque de frein composite (26) selon la revendication 14 ou 15, lorsqu'elle dépend de la revendication 11, dans lequel lesdits éléments de raccordement (9) comportent des moyens opposés (24), de préférence des rainures ou des trous, capables de venir en prise avec les éléments de blocage (23, 25).

17. Frein à disque comprenant un disque de frein composite selon l'une des revendications 14 à 16.
